(19) Europäisches Patentamt / European Patent Office / Office européen des brevets

(11) **EP 3 677 449 B1**

(12) **EUROPEAN PATENT SPECIFICATION**

(45) Date of publication and mention
of the grant of the patent:
**06.07.2022 Bulletin 2022/27**

(21) Application number: **18856633.5**

(22) Date of filing: **31.08.2018**

(51) International Patent Classification (IPC):
**B60C 19/00** $^{(2006.01)}$    **B60C 13/00** $^{(2006.01)}$
**B60C 15/06** $^{(2006.01)}$

(52) Cooperative Patent Classification (CPC):
**B60C 19/00;** B60C 2013/006; B60C 2015/0614

(86) International application number:
**PCT/JP2018/032462**

(87) International publication number:
**WO 2019/054212 (21.03.2019 Gazette 2019/12)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2017 JP 2017175252**

(43) Date of publication of application:
**08.07.2020 Bulletin 2020/28**

(73) Proprietor: **Sumitomo Rubber Industries, Ltd.
Kobe-shi, Hyogo 651-0072 (JP)**

(72) Inventors:
• **YOSHIZUMI Takuma
Kobe-shi
Hyogo 651-0072 (JP)**

• **NAKAJIMA Hiroki
Kobe-shi
Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
WO-A1-2007/100111     WO-A1-2007/100111
JP-A- 2007 230 261     JP-A- 2008 265 750
JP-A- 2012 240 680     JP-A- 2016 037 235
JP-A- 2016 037 236     JP-A- 2016 539 047
JP-A- 2016 539 047     US-A1- 2011 175 778

**Description**

TECHNICAL FIELD

The present invention relates to a pneumatic tire in which an electronic component such as RFID is provided.

BACKGROUND ART

In recent years, in order to monitor various data such as the internal pressure, temperature and rotational speed of pneumatic tires (hereinafter, also simply referred to as "tires") to improve safety, maintainability, etc. while the vehicle is traveling, it has been proposed that an electronic component such as a transponder for RFID (Radio Frequency Identification) (hereinafter, also simply referred to as "RFID") for recording the data is to be provided to a tire.

The transponder is a small, lightweight electronic component consisting of a semiconductor chip with a transmitter/receiver circuit, a control circuit, a memory, etc., and an antenna. As the transponder, battery-less one is often used which can transmit various data in the memory as response radio waves when it receives an inquiry radio wave which is used as electrical energy.

As a method of providing such an electronic component to a tire, a method has been proposed in which the electronic component is adhered to the surface of the tire after vulcanization by adhesion or the like (for example, Patent Document 1). However, when this method is adopted, there is a problem that the electronic component easily falls-off while traveling on the road surface, although there is little risk that the electronic component is destroyed.

Then, in order to prevent falling-off of the electronic component, a method has been proposed in which the electronic component is integrated with a tire by vulcanization adhesion accompanying vulcanization molding after molding the green tire while embedding the electronic component inside (for example, Patent Document 2). Patent Documents 3 and 4 disclose other tires with electronic components.

PRIOR ART DOCUMENTS

PATENT DOCUMENTS

[Patent document 1] JP2006-168473 A
[Patent document 2] JP2008-265750 A
[Patent document 3] JP2016-539047 A
[Patent document 4] WO 2007/100111 A1

SUMMARY OF INVENTION

PROBLEM TO BE SOLVED BY THE INVENTION

However, when a method of integrating the electronic components provided inside the unvulcanized tire is adopted, there is a risk that the electronic component is damaged or deformed by an impact load during traveling on the road surface or the like and sufficient reading performance cannot be obtained, although there is no risk that the electronic component may fall-off.

Therefore, an object of the present invention is to provide a manufacturing technology for a tire which can suppress damage and deformation of the electronic component by an impact load during traveling on the road surface or the like and maintain sufficient reading performance, even when the tire has an electronic component provided therein.

MEANS FOR SOLVING THE PROBLEM

The inventors of the present invention have earnestly studied for solving the problem, found that the problem can be solved by the pneumatic tire according to claim 1. Preferred features are defined in the dependent claims.

EFFECT OF THE INVENTION

According to the present invention, a manufacturing technology for a tire is provided which can manufacture a tire in which damage and deformation of the electronic component by an impact load during traveling on the road surface or the like are suppressed and sufficient reading performance can be maintained.

BRIEF DESCRIPTION OF DRAWINGS

[Figure 1] This figure is a cross-sectional view showing the configuration of a pneumatic tire according to an embodiment of the present invention.
[Figure 2] It is a figure explaining the communication measurement points in Examples of present invention.

EMBODIMENT FOR CARRYING OUT THE INVENTION

Hereinafter, the present invention will be described based on embodiments.

[1] Background of the Present Invention

As a result of studies for solving the above mentioned problems, the present inventors have thought that it is preferable to harden the rubber member for tire located inward in the tire axial direction from the position where the electronic component is provided in order to suppress damage and deformation of the electronic component by an impact load or the like when traveling on the road surface.
That is, since the electronic component provided in the tire is hard, it is necessary to suppress the deformation of the peripheral members as much as possible to suppress the influence on the electronic component, and it was considered that deformation of peripheral members can be suppressed and damage to the electronic component can be suppressed if the rubber member for tire located inward in the tire axial direction from the position where the electronic component is disposed has a sufficiently high E* (complex elastic modulus) and has a high rigidity.
And, by conducting a concrete examination, it was found that the internal temperatures of the tire are greatly different between the case of normal driving and the case of high speed and severe handling and the rigidity (elastic modulus) changes accordingly, and, therefore, this change needs to be controlled appropriately.
Specifically, the internal temperature of the tire during normal driving is 50 to 70°C, while the internal temperature of the tire greatly rises to about 150°C when high-speed and severe handling is conducted. When the temperature rises greatly, the rigidity (elastic modulus) of the rubber member also changes accordingly. If the change is large, there is a risk that the electronic component may be damaged or deformed. For this reason, it is necessary to control the change in the rigidity (elastic modulus) of the rubber member so that it does not change significantly.
As a result of earnest studies, it has been found that the occurrence of damage and deformation of the electronic component is sufficiently suppressed and the reading performance of the electronic component can be maintained even if high-speed and severe handling is conducted,
when E*(50°C) at 50°C and E*(150°C) at 150°C of the rubber member for tire having the largest E* (50°C) at 50°C among the rubber members for tire located inward in the tire axial direction from the position where the electronic component is disposed satisfy the following formula.

$$\mathrm{E}^*(150^{\circ}\mathrm{C}) \,/\, \mathrm{E}^*(50^{\circ}\mathrm{C}) \geqq 0.9$$

Thus, the present invention has been completed. In the present application, E* means an absolute value.

[2] Embodiment of the present invention

1. The configuration of the tire

(1) Overall configuration

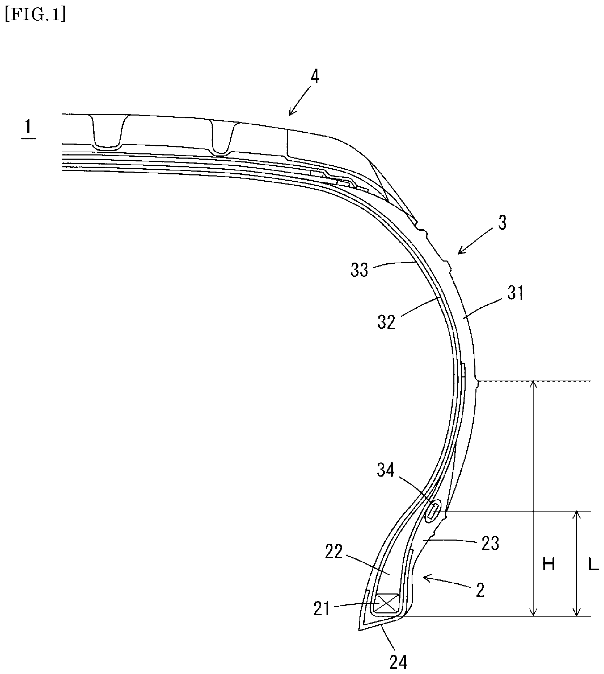

In a tire according to the present embodiment, an electronic component is provided between bead and clinch member (hereinafter, also referred to as "clinch") located outer side of the carcass. FIG.1 is a cross-sectional view showing a configuration of tire according to this embodiment. In FIG.1, 1 is a tire, 2 is a bead portion, 3 is a sidewall portion, 4 is a tread, 21 is bead core, 22 is a bead apex, and 23 is a clinch. Note that the clinch is an external member which is located inner side of the side wall in the tire radial direction and outer side of the bead apex in the tire axial direction. Also, 24 is a chafer, 31 is a sidewall, 32 is a carcass ply, and 33 is an inner liner. Further, 34 is an electronic component.

(2) Bead apex

In the present embodiment, the bead apex 22 constituting the bead portion 2 is the rubber member having the largest E*(50°C) among the rubber members disposed inner side of the electronic component 34 in the tire axial direction. And E*(50°C) at 50°C and E* (150°C)at 150 °C of the bead apex 22 satisfy the formula shown below. Incidentally, E* (50°C) of the rubber composition for a bead apex is, for example, 10-140 MPa, and E*(150°C) is, for example, 2.5-100 MPa.

$$\mathrm{E^*(150℃) \ / \ E^*(50℃) \geqq 0.9}$$

And when using rubber compositions for bead apex having E*(50 °C) within the range exemplified above, from the rubber compositions, a rubber composition for the bead apex having E*(150°C) which satisfies the above formula is selected and used. Similarly, when using rubber compositions for bead apex having E*(150°C) within the range exemplified above, from the rubber compositions, a rubber composition for the bead apex having E*(50°C) which satisfies the above formula is selected and used.
It is more preferable that E*(50°C) at 50°C and E*(150 °C) at 150 °C satisfy the following formula.

$$\mathrm{E^*(150℃) \ / \ E^*(50℃) \geqq 0.95}$$

It is further preferable that E*(50°C) at 50°C and E*(150°C) at 150°C satisfy the following formula.

$$\mathrm{E^*(150℃) \ / \ E^*(50℃) \geqq 1.00}$$

Even if the internal temperature of the tire rises to 150°C by a severe handling at a high speed, by suppressing E* so as not to drop by more than 10%, as shown in the above formula, occurrence of damage and deformation of the electrical component can be suppressed sufficiently and the reading performance of the electronic component can be maintained. In the above formula, the case where E*(150°C) is higher than E*(50°C) is also included.
There is no need to set the upper limit of each of the above formula in order to exert the effects of the present invention, but in view of easiness of manufacturing a tire, 1.2 or less is preferable, and 1.15 or less is more preferable.
In this case, E* in the above is the value measured under the conditions shown below using a viscoelastic spectrometer (for example, "VESF-3" manufactured by Iwamoto Seisakusho Ltd.) in accordance with the prescription of "JIS K 6394".

> Initial strain: 10%
> Amplitude: ± 2.0%
> Frequency: 10Hz
> Deformation mode: Tension
> Measurement temperature: 50 °C and 150 °C

(3) Electronic component

In the present embodiment, specific examples of the electronic components include RFID, pressure sensor, temperature sensor, acceleration sensor, magnetic sensor, groove depth sensor and the like. Among them, RFID is particularly preferable because a RFID can read and store large volume of information without contact and can store manufacturing information of the tire, management information, customer information and the like, in addition to data such as pressure, temperature and the like.
And the specific position where the electronic component 34 is provided is not particularly limited as far as it is a place where reliable information communication is possible and the electronic component is hardly damaged by the deformation of the tire. As a position where the damage of the electronic component by the deformation of the tire is relatively small and communication from the outside can be made without problems when assembled in the rim, for example, a position between the bead portion and the clinch, between the bead portion and the sidewall, between the bead reinforcing layer disposed outer side of the carcass ply 32 in the tire axial direction (the right side in FIG.1) and the clinch, between the bead reinforcing layer and the sidewall, or the like can be mentioned. And it is preferable to be disposed at a position outer side of the carcass in the tire axial direction in the cross-sectional view of the tire, where the height from the bottom of the bead core (L in FIG.1) is 20-80 % with respect to the distance from the position of the maximum tire width to the bottom of the bead core (H in FIG.1) in the equatorial direction.

In the present embodiment, the longitudinal size (overall length including the IC chip and the antenna) of the electronic component provided in the tire is preferably 18 cm or less, more preferably 9 cm or less, further more preferably 4 cm or less, and most preferably 2 cm or less. In such a small size, there is a risk of causing damage and deformation of the electronic component due to a decrease in rigidity caused by an increase in the internal temperature of the tire due to high-speed and severe handling. However, as described above, in this embodiment, the electronic component is not damaged or deformed and the electronic component can maintain the reading performance, even if the internal temperature of the tire rises, since a rubber member that suppresses the decrease in rigidity is disposed inward in the tire axial direction. At this time, by arranging the antenna portion of the electronic component so as to extend in an orthogonal direction to the cord of carcass, the bending of the antenna portion can be kept to a minimum.

(4) Rubber composition for Bead apex

In this embodiment, the rubber composition used in the manufacture of bead apex can be obtained by kneading and mixing a rubber component which is the main component and various compounding materials such as a heat resistance improving agent, a reinforcing material, an anti-aging agent, an additive, and the like.

(a) Formulation

(i) Rubber component

As the rubber component, for example, diene rubbers such as natural rubber (NR), isoprene rubber (IR), butadiene rubber (BR), styrene butadiene rubber (SBR), acrylonitrile butadiene rubber (NBR), chloroprene rubber (CR), butyl rubber (IIR), and the like can be mentioned. Among them, isoprene-based rubbers (NR and IR) are preferable from the viewpoint that steering stability, low fuel consumption and extrusion processability can be improved favorably.

Content of the isoprene-based rubber (NR or IR) is preferably 20 parts by mass or more, and more preferably 25 parts by mass or more in 100 parts by mass of the rubber component. Moreover, it is preferably 40 parts by mass or less, and more preferably 35 parts by mass or less. By setting the content of isoprene-based rubber (NR or IR) as described above, it is possible to sufficiently secure a balance between low heat generation and extensibility that secures durability.

Content of BR is preferably 60 parts by mass or more, more preferably 65 parts by mass or more in 100 parts by mass of the rubber component. Moreover, it is preferably 80 parts by mass or less, and more preferably 75 parts by mass or less. By setting the content of BR in the rubber component within the above range, sufficient bending crack growth resistance and sufficient breaking strength can be secured.

The BR is not particularly limited. For example, BR of high cis content, BR containing a syndiotactic polybutadiene crystal (SPB-containing BR), modified BR, and the like, can be used. Among these, SPB-containing BR is preferable from the viewpoint that it greatly improves the extrusion processability by the intrinsic orientation crystal components.

(ii) Carbon black

It is preferable that carbon black is compounded as a reinforcing material in the rubber composition of the present embodiment. Examples of carbon black include GPF, HAF, ISAF, SAF, FF, FEF and the like. One of these carbon blacks may be used alone, or two or more thereof may be used in combination. Among these, FEF is preferable from the viewpoint of the extrusion processability and impact absorption.

As content of carbon black in the said rubber composition, 40 parts by mass or more is preferable, and 45 parts by mass or more is more preferable with respect to 100 parts by mass of rubber components. Moreover, 60 parts by mass or less is preferable, and 55 parts by mass or less is more preferable. By setting the content of carbon black in the rubber composition within the above range, sufficient extrusion processability and impact absorption can be obtained.

(iii) Silica

In this embodiment, silica is further contained as a reinforcing material. Since silica has no conductivity, when it is used as a reinforcing material, the dielectric constant can be lowered and the read range of the electronic component can be expanded. In addition, since hydration water contained in silica and the surface functional groups can capture ozone, ozone resistance can be improved and durability of tire can be improved.

Type of silica is not particularly limited. For example, wet silica (hydrous silicic acid), dry silica (anhydrous silicic acid), colloidal silica and the like used in commercially available rubber compositions can be used. Wet silica containing hydration water and containing a large amount of silanol groups is preferable because ozone can be effectively captured.

Content of silica is preferably 5 parts by mass or more and more preferably 10 parts by mass or more with respect to 100 parts by mass of the rubber component. Moreover, it is preferably 20 parts by mass or less, and more preferably 15 parts by mass or less. By setting the content of silica in the rubber composition within the above range, sufficient extrusion processability and ozone resistance can be obtained.

At this time, in order to improve the dispersibility of silica and to improve the mechanical properties and the moldability by reaction with the silica, it is preferable to additionally contain a silane coupling agent.

Although the silane coupling agent is not specifically limited, examples thereof include a sulfide type, a vinyl type, an amino type, a glycidoxy type, a nitro type and a chloro type silane coupling agent. Among them, a sulfide type silane coupling agent is preferable, and bis (3-triethoxysilylpropyl) tetrasulfide is more preferable, from the viewpoint of excellent dispersibility and low heat generation.

(iv) Heat resistance improving agent

The rubber composition of the present embodiment preferably contains a heat resistance improving agent as a material to suppress the change in E* at high temperatures described above.

Examples of the heat resistance improving agents include acrylates or methacrylates having two or more ester groups bonded to a carbon atom. Specifically, 1,3-butylene glycol diacrylate, 1,5-pentanediol diacrylate, neopentyl glycol diacrylate, 1,6-hexanediol diacrylate, diethylene glycol diacrylate, triethylene glycol diacrylate, tetraethylene glycol diacrylate, polyethylene glycol diacrylate, polypropylene glycol diacrylate, bis (4-acryloxy) polyethoxy phenylpropane oligoester diacrylate, pentaerythritol triacrylate (PETA), trimethylolpropane triacrylate (TMPTA), tetramethylol methane tetraacrylate (TMMTA), dipentaerythritol penta/hexa acrylate (DPHA), oligoester polyacrylate, dipropylene glycol dimethacrylate, trimethylol ethane trimethacrylate, trimethylol propane trimethacrylate, di(tetramethylol methane) pentamethacrylate, di(tetramethylolmethane) trimethacrylate, and the like, can be mentioned as the examples. Among them, di(tetramethylolmethane) pentamethacrylate, di(tetramethylolmethane)trimethacrylate and trimethylolpropane trimethacrylate are particularly preferable. These compounds may be used alone or in combination of two or more.

Content of the heat resistance improving agent is preferably 2 parts by mass or more, and more preferably 3 parts by mass or more, with respect to 100 parts by mass of the rubber component. Moreover, it is preferably 7 parts by mass or less, and more preferably 5 parts by mass or less. If the content is too small, effect of the heat resistance improving agent cannot be obtained sufficiently, and if the content is too large, the effect is saturated.

The heat resistance improving agent is preferable because, when the temperature of the tire rises to such a temperature that the deterioration of the rubber starts, the polymer is re-crosslinked, thereby E* can be raised conversely.

(v) Vulcanizing agent and Vulcanization accelerator

Sulfur is used as a vulcanizing agent, and content thereof is preferably 1 part by mass or more, and more preferably 2 parts by mass or more with respect to 100 parts by mass of the rubber component. Moreover, it is preferably 8 parts by mass or less, and more preferably 6 parts by mass or less. By setting the content of sulfur within the above range, it becomes possible to secure sufficient steering stability, to suppress sulfur bloom and stickiness, and to secure the durability. The content of sulfur is pure sulfur content. In the case of using the insoluble sulfur, it is a content excluding oil content.

Sulfur is usually used with a vulcanization accelerator. Content of the vulcanization accelerator is preferably 5 parts by mass or more, and more preferably 6 parts by mass or more with respect to 100 parts by mass of the rubber component. Moreover, it is preferably 10 parts by mass or less, and more preferably 8 parts by mass or less. By setting the content of the vulcanization accelerator within the above range, the effects of the present invention tend to be favorably obtained. Specific examples of the vulcanization accelerator include sulfenamide type, thiazole type, thiuram type, thiourea type, guanidine type, dithiocarbamic acid type, aldehyde-amine type, aldehyde-ammonia type, imidazoline type, xanthate type vulcanization accelerator, and the like. These vulcanization accelerators may be used alone or in combination of two or more. Among them, sulfenamide type vulcanization accelerators are preferable, because the scorch time and the vulcanization time can be balanced.

Furthermore, when a vulcanization accelerator is used in combination with hexamethylenetetramine (HMT), hexamethoxymethylol melamine (HMMM), hexamethoxymethylol pentamethyl ether (HMMPME), melamine, methylol melamine, and the like, it acts on the heat resistance improving agent in the same manner as a curing agent acts on a cured resin such as a phenolic resin, and the effect of the heat resistance improving agent can be exhibited more sufficiently, therefore, preferable.

(vi) Stearic acid

As stearic acid, conventionally known ones can be used. For example, products manufactured by NOF Corporation, Kao Corporation, Wako Pure Chemical Industries, Ltd., Chiba Fatty Acid Corporation, etc. can be used. When stearic acid is used, content of stearic acid is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of stearic acid within the above range, the effects of the present invention tend to be obtained favorably.

(vii) Zinc oxide

As zinc oxide, conventionally known ones can be used. For example, products manufactured by Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used. When using zinc oxide, content of zinc oxide is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of zinc oxide within the above range, the effects of the present invention tend to be obtained favorably.

(viii) Anti-aging agent

As an anti-aging agent, an amine-type anti-aging agent having excellent ozone resistance effect is suitable. The amine-type anti-aging agent is not particularly limited, and examples thereof include amine derivatives such as diphenylamine-type, p-phenylenediamine-type, naphthylamine-type and ketone amine condensate-type ones. These may be used alone, or two or more may be used in combination. Examples of the diphenylamine type derivatives include p-(p-toluenesulfonylamide)diphenylamine, octylated diphenylamine, 4,4'-bis($\alpha,\alpha'$-dimethylbenzyl)diphenylamine and the like. Examples of the p-phenylenediamine type derivatives include N- (1,3-dimethylbutyl)-N'-phenyl-p-phenylenediamine (6PPD), N-phenyl-N'-isopropyl-p-phenylenediamine (IPPD) and N,N'-di-2-naphthyl-p-phenylenediamine and the like. Examples of the naphthylamine type derivatives include phenyl-$\alpha$-naphthylamine and the like. Among them, phenylenediamine type and ketone amine condensate type are preferable. Content of the anti-aging agent is preferably 0.3 part by mass or more, and more preferably 0.5 part by mass or more with respect to 100 parts by mass of the rubber component. Moreover, it is preferably 8 parts by mass or less, and more preferably 2.5 parts by mass or less.

(ix) Oil

Example of oils include process oils, vegetable oils and fats, and mixtures thereof. As the process oil, for example, paraffin-based process oil, aroma-based process oil, naphthene-based process oil and the like can be used. As the vegetable fats and oils, castor oil, cottonseed oil, linseed oil, rapeseed oil, soybean oil, palm oil, coconut oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, tung oil and the like can be mentioned. These may be used alone or in combination of two or more. Specific examples of the oils include products manufactured by Idemitsu Kosan Co., Ltd., Sankyo Yuka Kogyo Co., Ltd., Japan Energy Co., Ltd., Orisoi Company, H & R Company, Toyokuni Oil Co., Ltd., Showa Shell Co., Ltd., Fuji Kosan Co., Ltd., etc. Content of the oil is preferably 0.5 part by mass or more, and more preferably 1 part by mass or more with respect to 100 parts by mass of the rubber component. Moreover, it is preferably 10 parts by mass or less, and more preferably 5 parts by mass or less.

(x) Others

In addition to the above components, the rubber composition of the present embodiment may also contain compounding materials conventionally used in the rubber industry. For example, inorganic fillers such as talc and calcium carbonate, silane coupling agents, organic fillers such as cellulose fibers, softeners such as liquid rubber and adhesive resins, vulcanizing agents other than sulfur, organic crosslinking agents, and the like may be compounded as needed. About the compounding quantity of each compounding material, it can be selected suitably.

As described above, the bead apex is preferably adjusted so that $E^*$ satisfies a predetermined relational formula, as the rubber member for tire having the largest $E^*$(50°C) at 50°C among rubber members for tires located inward in the tire axial direction from the position where the electronic component is provided. As a method for adjusting the $E^*$ of the bead apex, adjustment by increasing or decreasing the amount of heat resistance improving agent can be mentioned. As shown in later-described examples, $E^*$ can be increased by increasing the amount of heat resistance improving agent. $E^*$ can also be adjusted by increasing or decreasing the amount of carbon black or sulfur. As shown in later-described examples, $E^*$ can be increased by increasing the amount of carbon black or sulfur. However, when the amount of carbon black is increased, the heat generation property increases, and when the amount of sulfur is increased, the heat generation property decreases. Therefore, it is preferable to adopt a method in which use of the heat resistance improving agent and use amount of it are determined first, then the amount of sulfur is adjusted, thereafter the amount of carbon black is adjusted finally. Thereby, the aimed E* can be achieved without need for excessive trial and error.

(b) Manufacturing method of Rubber composition

The rubber composition for bead apex can be manufactured by a known method, for example, by kneading the above components using a rubber kneading apparatus such as an open roll, a banbury mixer or the like.

2. Manufacture of Tire

The tire according to the present embodiment can be manufactured by a usual method except that an electronic component is provided in a rubber member during molding. That is, the rubber composition is molded by extrusion processing in accordance with the shape of the bead apex at the unvulcanized stage, pasted together with other tire members on a tire forming machine according to a usual method, and an unvulcanized tire is formed. In the middle of molding, an electronic component is embedded at a predetermined position between the bead apex and the clinch.
Thereafter, a tire is manufactured by heating and pressing the unvulcanized tire in which an electronic component is provided in a vulcanizer.
In the above, the bead apex 22 is described as a rubber member for tire having the largest E*(50°C). It can be considered as well that the carcass ply 32 is a rubber member for tire having the largest E*(50 °C).

EXAMPLES

Hereinafter, the present invention will be described more specifically with reference to examples. The following examples are performed as the bead apex is a rubber member for tire having the largest E*(50°C), like the above.

1. Compounding materials and Formulations

The compounding materials are shown in Table 1, and the compounding formulation is shown in Table 2 and Table 3.

[Table 1]

| Compounding materials | Product Name | Manufacturer |
|---|---|---|
| (Rubber component) | | |
| IR | Nipol IR2200 | Nippon Zeon |
| NR | TSR20 | |
| SBR | SBR1502 | Sumitomo Chemical Co., Ltd. |
| BR | UBEPOL BR150B | Ube Industries, Ltd. |
| (Reinforcing material) | | |
| Carbon Black 1 | N330 | Showa Cabot Co., Ltd. |
| Carbon Black 2 | N550 | Showa Cabot Co., Ltd. |
| Silica | Ultrasil VN3 | Evonik Degussa |
| Silane coupling agent | Si69 | Evonik Degussa |
| (Heat resistance improving agent) | | |
| DPHA | KAYARAD DPHA | Nippon Kayaku Co., Ltd. |
| (Curable resin ▪ Curing agent) | | |
| Curable resin | PR12686 | Sumitomo Bakelite Co., Ltd. |
| Curing agent | Sunseller HMT | Sanshin Chemical Industry Co., Ltd. |
| (Softener) | | |
| Oil | Diana Process AH-24 | Idemitsu Kosan Co., Ltd |

(continued)

| (Softener) | | |
|---|---|---|
| (Anti-aging agent) | | |
| Anti-aging agent | NOCRACK 6C | Ouchi Shinko Chemical Co., Ltd. |
| (Vulcanizing agent) | | |
| Sulfur | Insoluble sulfur | Tsurumi Chemical Industry Co., Ltd. |
| Vulcanizing aid | Tacquiroll V-200 | Taoka Chemical Co., Ltd. |
| Vulcanization accelerator | Sunseller NS-G | Sanshin Chemical Industry Co., Ltd. |
| (Others) | | |
| Stearic acid | Tsubaki | NOF CORPORATION |
| Zinc oxide | Zinc oxide #1 | Mitsui Mining & Smelting Co., Ltd. |

[Table 2]

| Example/ Comparative Example | Example No. | | | | | | | |
|---|---|---|---|---|---|---|---|---|
| | 1 | 2 | 3 | 4 | 5 | 6 | 7 | 8 |
| IR | 30 | 30 | 30 | 30 | 30 | 30 | 30 | 30 |
| NR | - | - | - | - | - | - | - | - |
| SBR | - | - | - | - | - | - | - | - |
| BR | 70 | 70 | 70 | 70 | 70 | 70 | 70 | 70 |
| Carbon Black 1 | - | - | - | - | - | - | - | - |
| Carbon Black 2 | 50 | 50 | 50 | 50 | 50 | 40 | 40 | 40 |
| Silica | 10 | 15 | 15 | 15 | 15 | 15 | 15 | 15 |
| Silane coupling agent | 1 | 1.5 | 1.5 | 1.5 | 1.5 | 1.5 | 1.5 | 1.5 |
| Heat resistance improving agent | - | - | 3 | 5 | 7 | 3 | 5 | 7 |
| Curable resin | - | - | - | - | - | - | - | - |
| Oil | - | - | - | - | - | - | - | - |
| Anti-aging agent | 3 | 3 | 3 | 3 | 3 | 3 | 3 | 3 |
| Stearic acid | 3 | 3 | 3 | 3 | 3 | 3 | 3 | 3 |
| Zinc oxide | 2 | 2 | 2 | 2 | 2 | 2 | 2 | 2 |
| Sulfur | 7 | 7 | 7 | 7 | 7 | 7 | 7 | 7 |
| Vulcanizing aid | 5 | 5 | 5 | 5 | 5 | 5 | 5 | 5 |
| Vulcanization accelerator | 2 | 2 | 2 | 2 | 2 | 2 | 2 | 2 |
| Curing agent | 2 | 2 | 2 | 2 | 2 | 2 | 2 | 2 |

[Table 3]

| Example/ Comparative Example | Example No. | | | Comparative Example No. | | |
|---|---|---|---|---|---|---|
| | 9 | 10 | 11 | 1 | 2 | 3 |
| IR | 30 | 30 | 30 | - | - | - |

(continued)

| Example/ Comparative Example | Example No. | | | Comparative Example No. | | |
|---|---|---|---|---|---|---|
| | 9 | 10 | 11 | 1 | 2 | 3 |
| NR | - | - | - | 70 | 70 | 70 |
| SBR | - | - | - | 30 | 30 | 30 |
| BR | 70 | 70 | 70 | - | - | - |
| Carbon Black 1 | - | - | - | 70 | 70 | 60 |
| Carbon Black 2 | 50 | 45 | 35 | - | - | - |
| Silica | 15 | 15 | 15 | - | - | - |
| Silane coupling agent | 1.5 | 1.5 | 1.5 | - | - | - |
| Heat resistance improving agent | 3 | 3 | 3 | - | - | - |
| Curable resin | - | - | - | 3 | 5 | 10 |
| Oil | - | - | - | 10 | 10 | 5 |
| Anti-aging agent | 3 | 3 | 3 | | | |
| Stearic acid | 3 | 3 | 3 | 2 | 2 | 2 |
| Zinc oxide | 2 | 2 | 2 | 3 | 3 | 3 |
| Sulfur | 7 | 7 | 8 | 2.5 | 2.5 | 2.5 |
| Vulcanizing aid | 5 | 5 | 5 | - | - | - |
| Vulcanization accelerator | 4 | 6 | 8 | 2 | 2 | 2.5 |
| Curing agent | 2 | 2 | 2 | 0.5 | 0.5 | 1 |

2. Preparation of Pneumatic tire

Based on Tables 1, 2 and 3, using a banbury mixer manufactured by Kobe Steel Ltd., compounding materials other than sulfur and vulcanization accelerator are kneaded. Then, to the kneaded product thus obtained, sulfur and vulcanization accelerator are added and kneaded by using an open roll to obtain an unvulcanized rubber composition for bead apex. Further, a rubber composition for coating the electronic component 34 can be obtained on the basis of Example 1 in JP2013-245339 A.

Then, the obtained unvulcanized rubber composition is formed into the shape of a bead apex, and pasted together by laminating with other tire components in a tire molding machine. Electronic component 34 coated with an unvulcanized rubber composition is disposed between the bead apex and clinch at a position 46% from the bottom of the bead core, and vulcanization is conducted under the conditions of 150°C for 30 minutes, thereby a test tire (tire size: 205/55R16) can be obtained. As the electronic component 34, RFID in which a 30 mm antenna is provided on both sides of a 3 mm $\times$ 3 mm $\times$ 0.4 mm IC chip can be used.

The physical properties (E*) of each formulation shown in Table 2 and Table 3 are measured according to the following method.

That is, a rubber sample is extracted from the bead apex of each pneumatic tire, and E* (unit: MPa) is measured under the following conditions using a viscoelastic spectrometer ("VESF-3" manufactured by Iwamoto Seisakusho).

| | |
|---|---|
| Initial strain: | 10% |
| Amplitude: | $\pm$ 2.0% |
| Frequency: | 10Hz |
| Deformation mode: | Tension |
| Measurement temperature: | 50°C and 150°C |

The relationship between the physical properties of the bead apex, the durability of the tire and the communication performance of the electronic components are shown in Table 4 and Table 5.

For the evaluation of the durability of above tire, is conducted a test to run around the circuit 5 laps at high speed driving with raising the speed until reaching the limit grip. If 5 laps run is possible, evaluation result is "Y"(acceptable), and if not possible, evaluation result is "NG"(not acceptable). Regarding the driving conditions, mounting rim is 16 × 6.5J, tire inner pressure is 230 kPa, and the test vehicle is a front wheel drive vehicle, the displacement is 2000 cc, and the tire mounting position is all wheels.

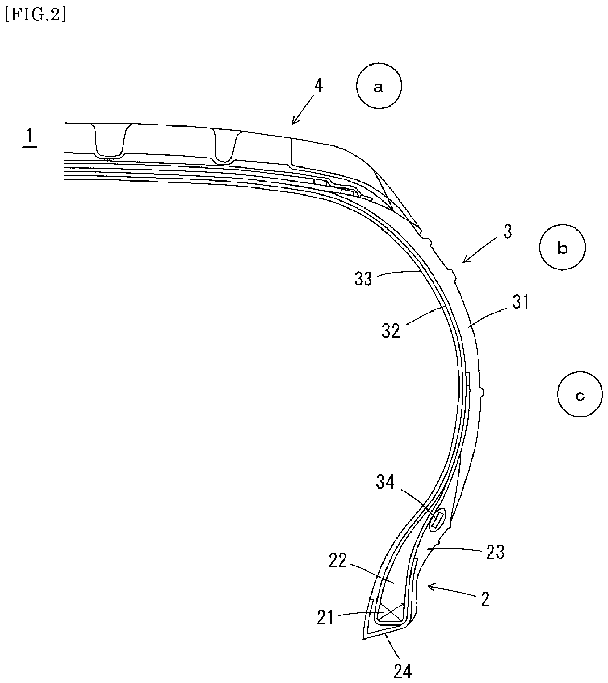

As the evaluation method of communication performance, transceivers for the electronic component are installed at three measurement points (a to c) of the circle shown in FIG. 2 and it is judged whether communication of data with the electronic component is possible.

Specifically, the tire is assembled in a rim and mounted in a vehicle for conducting the measurement, and the ratio of (the number of readable positions after the durability evaluation / the number of readable positions before the durability evaluation) is calculated. The evaluation result is "EX"(excellent), if the average value of the four tire is 60% or more; "G"(good), if 50% or more and less than 60%; "Y"(acceptable), if more than 0% and less than 50%; and "NG"(not acceptable), if 0% or readable position before durability evaluation is 0.

[Table 4]

| | | Example No. | | | | | | | |
|---|---|---|---|---|---|---|---|---|---|
| | | 1 | 2 | 3 | 4 | 5 | 6 | 7 | 8 |
| Physical properties | A: E*(50°C) | 12 | 14 | 15.1 | 16 | 16.5 | 13.2 | 13.8 | 14.1 |
| | B: E*(150°C) | 10.8 | 13 | 15.4 | 14.4 | 15.3 | 12 | 13 | 13.8 |
| | B/A | 0.9 | 0.93 | 1.02 | 0.9 | 0.93 | 0.91 | 0.94 | 0.98 |
| Evalua - tion | durability of tire | Y | Y | Y | Y | Y | Y | Y | Y |
| | communication performance of electronic component | G | G | EX | G | G | G | G | EX |

[Table 5]

| | | Example No. | | | Comparative Examples No. | | |
|---|---|---|---|---|---|---|---|
| | | 9 | 10 | 11 | 1 | 2 | 3 |
| Physical properties | A: E*(50°C) | 16.2 | 15.8 | 16.5 | 21 | 39 | 49 |
| | B: E*(150°C) | 17.8 | 18.2 | 19.8 | 17.9 | 29.3 | 24.5 |
| | B/A | 1.1 | 1.15 | 1.2 | 0.85 | 0.75 | 0.5 |
| Evalua -tion | durability of tire | Y | Y | Y | NG | Y | Y |
| | communication performance of electronic component | EX | EX | EX | - | NG | NG |

Although the present invention has been described based on the embodiments, the present invention is not limited to the above embodiment. Various modifications can be made to the above embodiments within the scope defined by the appended claims

DESCRIPTION OF THE REFERENCE SIGNS

1    tire
2    bead portion
3    sidewall portion
4    tread
21   bead core
22   bead apex

23   clinch
24   chafer
31   side wall
32   carcass ply
33   inner liner
34   electronic component
H   Distance from the position of maximum tire width to the bottom of the bead core
L   Distance from the bottom of the bead core of electronic component

**Claims**

1.  A pneumatic tire (1) provided with an electronic component (34) at a position to the outer side of the carcass in the tire axial direction,
    wherein E*(50°C) at 50°C and E*(150°C) at 150°C of the rubber member (22) for a tire having the largest E*(50°C) at 50°C, among rubber members for a tire located inward in the tire axial direction from a position where the electronic component (34) is provided, satisfy the following formula, wherein the values of E* are measured using a viscoelastic spectrometer at an initial strain of 10%, an amplitude of ± 2.0%, and a frequency of 10Hz in tensile deformation mode:

$$\mathrm{E^*(150℃) / E^*(50℃) \geq 0.90}$$

2.  The pneumatic tire according to claim 1, wherein the above E*(50°C) at 50°C and E*(150°C) at 150°C satisfy the following formula.

$$\mathrm{E^*(150℃) / E^*(50℃) \geq 0.95}$$

3.  The pneumatic tire according to claim 2, wherein the above E*(50°C) at 50°C and E*(150°C) at 150°C satisfy the following formula.

$$\mathrm{E^*(150 ℃) / E^*(50 ℃) \geq 1.00}$$

4.  The pneumatic tire according to any one of claims 1 to 3, wherein the above E*(50°C) at 50°C and E*(150°C) at 150°C satisfy the following formula.

$$\mathrm{E^*(150 ℃) / E^*(50 ℃) \leq 1.2}$$

5.  The pneumatic tire according to claim 4, wherein the above E*(50°C) at 50°C and E*(150°C) at 150°C satisfy the following formula.

$$\mathrm{E^*(150 ℃) / E^*(50 ℃) \leq 1.15}$$

6.  The pneumatic tire according to any one of claims 1 to 5, wherein the electronic component (34) is located to the outer side of the carcass in the tire axial direction in the cross-sectional view, and embedded at a position of 20 to 80% from the bottom of bead core (21) with respect to the distance (H) from the position of the maximum tire width to the bottom of bead core (21) in the equatorial direction.

7.  The pneumatic tire according to any one of claims 1-6 wherein the electronic component (34) is a transponder for RFID.

**Patentansprüche**

1.  Luftreifen (1), der mit einer elektronischen Komponente (34) an einer Position zu der Außenseite der Karkasse hin in der axialen Richtung des Reifens versehen ist,
wobei E*(50°C) bei 50°C und E*(150°C) bei 150°C des Kautschukelements (22) für einen Reifen mit dem größten E*(50°C) bei 50°C unter Kautschukelementen für einen Reifen, die in der axialen Richtung des Reifens innen von einer Position angeordnet sind, an der die elektronische Komponente (34) vorgesehen ist, die folgende Formel erfüllen, wobei die Werte von E* unter Verwendung eines Viskoelastizitätsspektrometers bei einer anfänglichen Dehnung von 10 %, einer Amplitude von ± 2,0 % und einer Frequenz von 10 Hz im Zugverformungsmodus gemessen werden:

$$E^*(150°C) / E^*(50°C) \geqq 0,90$$

2. Luftreifen nach Anspruch 1,
wobei die obigen E*(50°C) bei 50°C und E*(150°C) bei 150°C die folgende Formel erfüllen.

$$E^*(150°C) / E^*(50°C) \geqq 0,95$$

3. Luftreifen nach Anspruch 2,
wobei die obigen E*(50°C) bei 50°C und E*(150°C) bei 150°C die folgende Formel erfüllen.

$$E^*(150°C) / E^*(50°C) \geqq 1,00$$

4. Luftreifen nach einem der Ansprüche 1 bis 3,
wobei die obigen E*(50°C) bei 50°C und E*(150°C) bei 150°C die folgende Formel erfüllen.

$$E^*(150°C) / E^*(50°C) \leqq 1,2$$

5. Luftreifen nach Anspruch 4,
wobei die obigen E*(50°C) bei 50°C und E*(150°C) bei 150°C die folgende Formel erfüllen.

$$E^*(150°C) / E^*(50°C) \leqq 1,15$$

6. Luftreifen nach einem der Ansprüche 1 bis 5,
wobei die elektronische Komponente (34) zu der Außenseite der Karkasse hin in der axialen Richtung des Reifens in der Querschnittsansicht angeordnet und an einer Position von 20 bis 80 % von der Unterseite des Wulstkerns (21) in Bezug auf den Abstand (H) von der Position der maximalen Reifenbreite zu der Unterseite des Wulstkerns (21) in der Äquatorialrichtung eingebettet ist.

7. Luftreifen nach einem der Ansprüche 1-6,
wobei die elektronische Komponente (34) ein Transponder für RFID ist.

**Revendications**

1. Bandage pneumatique (1) doté d'un composant électronique (34) à une position du côté extérieur de la carcasse dans la direction axiale du pneumatique,
dans lequel E*(50 °C) à 50 °C et E*(150 °C) à 150 °C de l'élément en caoutchouc (22) pour un pneumatique ayant le plus grand E*(50 °C) à 50 °C, parmi des éléments en caoutchouc pour un pneumatique situé à l'intérieur dans la direction axiale du pneumatique depuis une position dans laquelle le composant électronique (34) est fourni, satisfont la formule suivante, dans laquelle les valeurs de E* sont mesurées en utilisant un spectromètre de viscoélasticité à une contrainte initiale de 10 %, une amplitude de ± 2,0 %, et une fréquence de 10 Hz dans un mode de déformation en traction :

$$E^*(150 °C) / E^*(50 °C) \geq 0,90.$$

**2.** Bandage pneumatique selon la revendication 1, dans lequel les E*(50 °C) à 50 °C et E*(150 °C) à 150 °C précités satisfont la formule suivante :

$$E^*(150\ °C)\ /\ E^*(50\ °C) \geq 0,95.$$

**3.** Bandage pneumatique selon la revendication 2, dans lequel les E*(50 °C) à 50 °C et E*(150 °C) à 150 °C précités satisfont la formule suivante :

$$E^*(150\ °C)\ /\ E^*(50\ °C) \geq 1,00.$$

**4.** Bandage pneumatique selon l'une quelconque des revendications 1 à 3, dans lequel les E*(50 °C) à 50 °C et E*(150 °C) à 150 °C précités satisfont la formule suivante :

$$E^*(150\ °C)\ /\ E^*(50\ °C) \leq 1,2.$$

**5.** Bandage pneumatique selon la revendication 4, dans lequel les E*(50 °C) à 50 °C et E*(150 °C) à 150 °C précités satisfont la formule suivante :

$$E^*(150\ °C)\ /\ E^*(50\ °C) \leq 1,15.$$

**6.** Bandage pneumatique selon l'une quelconque des revendications 1 à 5, dans lequel le composant électronique (34) est situé du côté extérieur de la carcasse dans la direction axiale du pneumatique dans la vue de section transversale, et encastré à une position de 20 à 80 % depuis le fond d'âme de talon (21) par rapport à la distance (H) depuis la position de la largeur maximum du pneumatique jusqu'au fond d'âme de talon (21) dans la direction de l'équateur.

**7.** Bandage pneumatique selon l'une quelconque des revendications 1 à 6, dans lequel le composant électronique (34) est un transpondeur pour RFID.

[FIG.1]

[FIG.2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006168473 A
- JP 2008265750 A
- JP 2016539047 A
- WO 2007100111 A1
- JP 2013245339 A